(19) Europäisches Patentamt
European Patent Office
Office européen des brevets

(11) **EP 4 307 518 A1**

(12) **EUROPEAN PATENT APPLICATION**

(43) Date of publication:
**17.01.2024 Bulletin 2024/03**

(21) Application number: **23174909.4**

(22) Date of filing: **23.05.2023**

(51) International Patent Classification (IPC):
*H02J 7/00* (2006.01)    *H02J 50/00* (2016.01)
*H02J 50/12* (2016.01)

(52) Cooperative Patent Classification (CPC):
**H02J 50/12; H02J 7/0029; H02J 50/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2022   CN 202210625711**

(71) Applicant: **Huawei Digital Power Technologies
Co., Ltd.
Shenzhen, Guangdong 518043 (CN)**

(72) Inventors:
• **FANG, Yaoran**
  **518043 Shenzhen (CN)**
• **ZHANG, Tong**
  **518043 Shenzhen (CN)**
• **LI, Yuechao**
  **518043 Shenzhen (CN)**

(74) Representative: **Gill Jennings & Every LLP
The Broadgate Tower
20 Primrose Street
London EC2A 2ES (GB)**

(54) **ELECTRONIC DEVICE FOR WIRELESS POWER TRANSFER**

(57)    This application provides an electronic device, including a first circuit, a second circuit, a coil, and one or more resonant circuits. The first circuit may transmit a first signal through the coil, and the second circuit may transmit a second signal through the coil. Frequencies of the first signal and the second signal are different. The resonant circuit may be disposed between the first circuit and the coil to prevent the second signal from passing, or disposed between the second circuit and the coil to prevent the first signal from passing, so as to prevent the first signal from interfering with the second circuit or prevent the second signal from interfering with the first circuit.

FIG. 1

## Description

## TECHNICAL FIELD

This application relates to the field of wireless charging technologies, and in particular, to an electronic device.

## BACKGROUND

An electronic device may include a wireless charging (Wireless Power Transfer, WPT) circuit and a near-field communication (Near-field communication, NFC) or radio frequency identification (Radio Frequency Identification, RFID) circuit. The wireless charging circuit is configured to process a wireless charging signal, the NFC circuit is configured to process an NFC signal, and the RFID circuit is configured to process an RFID signal. A frequency of the wireless charging signal is different from a frequency of one or more of the NFC signal or the RFID signal. Interference occurs when the electronic device simultaneously receives the wireless charging signal and the NFC signal or the RFID signal. This affects stability of the electronic device, and degrades user experience.

## SUMMARY

This application provides an electronic device, to reduce interference between circuits for processing signals at different frequencies.

According to a first aspect, an embodiment of this application provides an electronic device. The electronic device includes a first circuit, a second circuit, a coil, and one or more resonant circuits. The first circuit may transmit a first signal through the coil, the second circuit may transmit a second signal through the coil, and frequencies of the first signal and the second signal are different. The one resonant circuit may be disposed between the first circuit and the coil, or between the second circuit and the coil; or the plurality of resonant circuits are separately disposed between the first circuit and the coil, and between the second circuit and the coil. A resonant circuit disposed between the first circuit and the coil may be configured to prevent the second signal from passing, and a resonant circuit disposed between the second circuit and the coil may be configured to prevent the first signal from passing.

In the electronic device, the resonant circuit disposed between the first circuit and the coil can prevent the second signal from passing, so as to prevent the second signal from reaching the first circuit, and prevent the second signal processed by the second circuit from interfering with the first circuit for processing the first signal; and the resonant circuit disposed between the second circuit and the coil can prevent the first signal from passing, so as to prevent the first signal from reaching the second circuit, and prevent the first signal processed by the first circuit from interfering with the second circuit for processing the second signal. In this way, in the electronic device, interference between the first circuit and the second circuit can be reduced, that is, interference between circuits for processing signals at different frequencies is reduced.

In a possible design, the resonant circuit may include one or more resonant units, and the resonant unit may include an inductor and a capacitor that are connected in parallel. A resonance frequency of the resonant circuit disposed between the first circuit and the coil is the same as a frequency of the second signal, to prevent the second signal from passing. A resonance frequency of the resonant circuit disposed between the second circuit and the coil is the same as a frequency of the first signal, to prevent the first signal from passing. In this design, simple passive devices (the capacitor and the inductor) are used to prevent the first signal or the second signal from passing. This can reduce costs and complexity of the electronic device while reducing interference between circuits for processing signals at different frequencies.

In a possible design, the first signal may be a wireless charging signal, and the second signal may be one or more of a near-field communication signal and a radio frequency identification signal. In this design, interference between a circuit for processing the wireless charging signal and a circuit for processing one or more of the near-field communication signal and the radio frequency identification signal can be reduced.

In a possible design, the electronic device may be a transmit end for wireless charging, and the first circuit may include a wireless charging transmitter circuit; or the electronic device may be a receive end for wireless charging, and the first circuit may include a wireless charging receiver circuit. In this design, the electronic device may be used in a transmit end or a receive end for wireless charging, so that interference between the wireless charging transmitter circuit and the second circuit in the transmit end or the receive end for wireless charging can be reduced.

In a possible design, the electronic device may be an electronic device for near-field communication or radio frequency identification, and the second circuit may include a radio frequency communication circuit. In this design, the electronic device may be used in an electronic device for near-field communication or radio frequency identification, so that interference between the first circuit and the radio frequency communication circuit in the electronic device for near-field communication or radio frequency identification can be reduced.

In a possible design, the coil may include a first coil configured to transmit the first signal, and a second coil configured to transmit the second signal. The one resonant circuit may be disposed between the first circuit and the first coil, or between the second circuit and the second coil; or the plurality of resonant circuits may be separately disposed between the first circuit and the first coil, and between the second circuit and the second coil. In this design, a resonant circuit disposed between the first circuit and the first coil can prevent the second signal from passing, so as to prevent the second signal from reaching the first circuit, and prevent the second signal from interfering with the first circuit; and a resonant circuit disposed between the second circuit and the second coil can prevent the first signal from passing, so as to prevent the first signal from reaching the second circuit, and prevent the first signal from interfering with the second circuit. In this way, in the electronic device, interference between the first circuit and the second circuit can be reduced.

According to a second aspect, an embodiment of this application provides an electronic device. The electronic device includes a wireless charging circuit, a radio frequency communication circuit, a coil, and one or more resonant circuits. The wireless charging circuit may transmit a wireless charging signal through the coil, and the radio frequency communication circuit may transmit one or more of a near-field communication signal and a radio frequency identification signal through the coil. The one resonant circuit may be disposed between the wireless charging circuit and the coil, or between the radio frequency communication circuit and the coil; or the plurality of resonant circuits may be separately disposed between the wireless charging circuit and the coil, and between the radio frequency communication circuit and the coil. A resonant circuit disposed between the wireless charging circuit and the coil may be configured to prevent the near-field communication signal and the radio frequency identification signal from passing, and a resonant circuit disposed between the radio frequency communication circuit and the coil may be configured to prevent the wireless charging signal from passing.

In the electronic device, the resonant circuit disposed between the wireless charging circuit and the coil can prevent the near-field communication signal and the radio frequency identification signal from passing, so as to prevent the near-field communication signal and the radio frequency identification signal from reaching the wireless charging circuit, and prevent the near-field communication signal and the radio frequency identification signal from interfering with the wireless charging circuit; and the resonant circuit disposed between the radio frequency communication circuit and the coil can prevent the wireless charging signal from passing, so as to prevent the wireless charging signal from reaching the radio frequency communication circuit, and prevent the wireless charging signal from interfering with the radio frequency communication circuit. In this way, in the electronic device, interference between the wireless charging circuit and the radio frequency communication circuit can be reduced.

In a possible design, the electronic device may be a transmit end for wireless charging, and the wireless charging circuit may include a signal generator, a power amplifier, a filtering network, and a matching network; or the electronic device may be a receive end for wireless charging, and the wireless charging circuit may include a load, a rectifier, a filtering network, and a matching network. In this design, the electronic device may be used in a transmit end or a receive end for wireless charging, so that interference between the wireless charging transmitter circuit and the radio frequency communication circuit in the transmit end or the receive end for wireless charging can be reduced. In addition, this design provides a specific structure of the wireless charging circuit, and is easy to implement.

In a possible design, the electronic device may be an electronic device for near-field communication or radio frequency identification, and the radio frequency communication circuit may include a near-field communication or radio frequency identification card reader, a filtering network, and a matching network. In this design, the electronic device may be used in an electronic device for near-field communication or radio frequency identification, so that interference between the wireless charging circuit and the radio frequency communication circuit in the electronic device for near-field communication or radio frequency identification can be reduced. In addition, this design provides a specific structure of the radio frequency communication circuit, and is easy to implement.

In a possible design, the resonant circuit disposed between the wireless charging circuit and the coil may be connected to the matching network in the wireless charging circuit, and the resonant circuit disposed between the radio frequency communication circuit and the coil may be connected to the matching network in the radio frequency communication circuit. This design provides a specific connection manner between the resonant circuit and the wireless charging circuit or the radio frequency communication circuit, and is easy to implement.

In a possible design, the resonant circuit may include one or more resonant units, and the resonant unit includes an inductor and a capacitor that are connected in parallel. In this design, in the resonant circuit, simple passive devices (the capacitor and the inductor) can be used to prevent the wireless charging signal or one or more of the near-field communication signal and the radio frequency identification signal from passing. This can reduce costs and complexity of the electronic device while reducing interference between circuits for processing signals at different frequencies.

In a possible design, the coil in the electronic device may be one coil. The resonant circuit disposed between the wireless charging circuit and the coil may be connected to one end of the coil, and another end of the coil is connected to the matching network in the wireless charging circuit. In other words, two ends of the coil are respectively connected to the resonant circuit and the matching network in the wireless charging circuit. The resonant circuit disposed between the radio frequency communication circuit and the coil may be connected to one end of the coil, and another end of the coil is connected to the matching network in the radio frequency communication circuit. In other words, two ends of the coil are respectively connected to the resonant circuit and the matching network in the radio frequency communication circuit. This design provides a specific connection manner between the coil and other elements in the electronic device, and is easy to implement.

In a possible design, the coil in the electronic device may include a plurality of coils. Optionally, the coil may include a first coil configured to transmit the wireless charging signal, and a second coil configured to transmit one or more of the near-field communication signal and the radio frequency identification signal. The one resonant circuit may be disposed between the wireless charging circuit and the first coil, or between the radio frequency communication circuit and the second coil; or the plurality of resonant circuits may be separately disposed between the wireless charging circuit and the first coil, and between the radio frequency communication circuit and the second coil.

In this design, a resonant circuit disposed between the wireless charging circuit and the first coil can prevent the near-field communication signal and the radio frequency identification signal from passing, so as to prevent the near-field communication signal and the radio frequency identification signal from reaching the wireless charging circuit, and prevent the near-field communication signal and the radio frequency identification signal from interfering with the wireless charging circuit; and a resonant circuit disposed between the radio frequency communication circuit and the second coil can prevent the wireless charging signal from passing, so as to prevent the wireless charging signal from reaching the radio frequency communication circuit, and prevent the wireless charging signal from interfering with the radio frequency communication circuit. In this way, in the electronic device, interference between the wireless charging circuit and the radio frequency communication circuit can be reduced.

Optionally, the resonant circuit disposed between the wireless charging circuit and the first coil may be connected to one end of the first coil, and another end of the first coil is connected to the matching network in the wireless charging circuit. In other words, two ends of the first coil are respectively connected to the resonant circuit and the matching network in the wireless charging circuit. The resonant circuit disposed between the radio frequency communication circuit and the second coil may be connected to one end of the second coil, and another end of the second coil is connected to the matching network in the radio frequency communication circuit. In other words, two ends of the second coil are respectively connected to the resonant circuit and the matching network in the radio frequency communication circuit. This design provides a specific connection manner between the plurality of coils and other elements in the electronic device, and is easy to implement.

## BRIEF DESCRIPTION OF DRAWINGS

FIG. 1 is a schematic diagram of a structure of a first electronic device according to an embodiment of this application;
FIG. 2A is a schematic diagram of a structure of a circuit 10 in a first electronic device according to an embodiment of this application;
FIG. 2B is a schematic diagram of another structure of a circuit 10 in a first electronic device according to an embodiment of this application;
FIG. 2C is a schematic diagram of a structure of a circuit 20 in a first electronic device according to an embodiment of this application;
FIG. 3A is a schematic diagram of a manner of disposing a resonant circuit in a first electronic device according to an embodiment of this application;
FIG. 3B is a schematic diagram of another manner of disposing a resonant circuit in a first electronic device according to an embodiment of this application;
FIG. 3C is a schematic diagram of still another manner of disposing a resonant circuit in a first electronic device according to an embodiment of this application;
FIG. 4A is a schematic diagram of a structure of a resonant circuit 40a in a first electronic device according to an embodiment of this application;
FIG. 4B is a schematic diagram of another structure of a resonant circuit 40a in a first electronic device according to an embodiment of this application;
FIG. 4C is a schematic diagram of a structure of a resonant circuit 40b in a first electronic device according to an embodiment of this application;
FIG. 4D is a schematic diagram of another structure of a resonant circuit 40b in a first electronic device according to an embodiment of this application;
FIG. 5A is a schematic diagram of a manner of disposing a coil 30 in a first electronic device according to an embodiment of this application;
FIG. 5B is a schematic diagram of another manner of disposing a coil 30 in a first electronic device according to an embodiment of this application;
FIG. 5C is a schematic diagram of still another manner of disposing a coil 30 in a first electronic device according to an embodiment of this application;
FIG. 6 is a schematic diagram of an application scenario according to an embodiment of this application;
FIG. 7 is a schematic diagram of a structure of a second electronic device according to an embodiment of this application;
FIG. 8A is a schematic diagram of a manner of disposing a resonant circuit in a second electronic device according to an embodiment of this application;
FIG. 8B is a schematic diagram of another manner of disposing a resonant circuit in a second electronic device according to an embodiment of this application;

FIG. 8C is a schematic diagram of still another manner of disposing a resonant circuit in a second electronic device according to an embodiment of this application;

FIG. 9A is a schematic diagram of a structure of a third electronic device according to an embodiment of this application;

FIG. 9B is a schematic diagram of signal impedance of a resonant circuit 603 in a third electronic device according to an embodiment of this application;

FIG. 9C is a schematic diagram of signal impedance of a resonant circuit 606 in a third electronic device according to an embodiment of this application;

FIG. 10A is a schematic diagram of a structure of a fourth communication device according to an embodiment of this application;

FIG. 10B is a schematic diagram of signal impedance of a resonant circuit 603 in a fourth electronic device according to an embodiment of this application;

FIG. 10C is a schematic diagram of signal impedance of a resonant circuit 606 in a fourth electronic device according to an embodiment of this application; and

FIG. 11 is a schematic diagram of a structure of a fifth communication device according to an embodiment of this application.

## DESCRIPTION OF EMBODIMENTS

To make objectives, technical solutions, and advantages of this application clearer, the following further describes this application in detail with reference to accompanying drawings.

It should be noted that, in descriptions of this application, "at least one" means one or more, and "a plurality of" means two or more. In view of this, in embodiments of this application, "a plurality of" may also be understood as "at least two". "And/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects, unless otherwise specified. In addition, it should be understood that, in descriptions of this application, terms such as "first" and "second" are merely used for distinguishing and description, but should not be understood as indicating or implying relative importance, and should not be understood as indicating or implying a sequence either.

It should be noted that, in embodiments of this application, a connection between two electrical elements may be a direct or indirect connection between the two electrical elements. For example, a connection between A and B may be a direct connection between A and B, or may be an indirect connection between A and B through one or more other electrical elements. For example, the connection between A and B may mean that A is directly connected to C, C is directly connected to B, and A and B are connected to each other through C.

For ease of understanding this application, the following describes the background.

In WPT, NFC, and RFID, an electromagnetic field is established between a transmit coil and a receive coil to transmit energy and information. In magnetic induction wireless charging, energy is transmitted through coupling between an alternating-current magnetic field produced by a transmit coil in a charging base and a receive coil in a charged device (for example, a mobile phone or a watch). The NFC technology is a sub-technology of the RFID technology. In the NFC/RFID technology, data is transmitted through coupling between an alternating-current magnetic field produced by a transmit coil in an NFC/RFID card reader and a receive coil in a card (for example, a bus card, a bank card, or an identification card) with an NFC/RFID function. Because a magnetic field produced in wireless charging is usually stronger than an NFC/RFID magnetic field, the NFC/RFID card may be damaged by the magnetic field produced in wireless charging.

To prevent the NFC/RFID card from being damaged by the magnetic field produced in wireless charging, an NFC/RFID card detection function needs to be added to a transmit end for wireless charging. For example, when the NFC/RFID card is detected, a wireless charging signal may be weakened or disabled, to prevent the NFC/RFID card from being damaged by the magnetic field produced in wireless charging. Because a wireless charging circuit (which may also be referred to as a wireless charging module) and an NFC/RFID card detection circuit (which may also be referred to as an NFC/RFID card detection module) may be coupled to each other through a coil, severe interference occurs between the two circuits in the transmit end for wireless charging.

In addition, a receive end for wireless charging (for example, a mobile phone or a watch) may include both a wireless charging circuit and an NFC/RFID functional circuit. The wireless charging circuit and the NFC/RFID functional circuit are also coupled to each other through a coil. Therefore, severe interference occurs between the two circuits in the receive end for wireless charging.

The following clearly and completely describes technical solutions in embodiments of this application with reference to accompanying drawings in embodiments of this application.

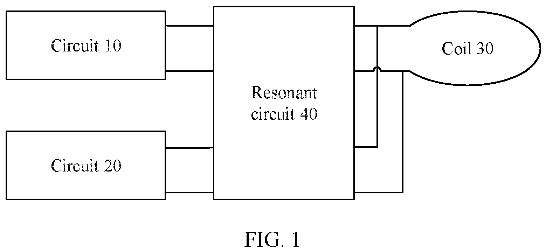

An embodiment of this application provides an electronic device. As shown in FIG. 1, the electronic device may include a circuit 10, a circuit 20, a coil 30, and one or more resonant circuits 40. The following describes components and connection relationships of the electronic device.

The circuit 10 may transmit a first signal through the coil 30. In other words, the circuit 10 may process the first signal, and the first signal may be transmitted through the coil 30. The first signal may be a wireless charging signal. For example, the first signal is a wireless charging signal at a frequency of 6.78 megahertz (MHz) or 100 kilohertz (kHz).

Optionally, the circuit 10 is a wireless charging circuit. The circuit 10 may be implemented in one of the following manners.

Manner 1: When the electronic device is a transmit end for wireless charging (for example, the electronic device includes a wireless charging base), the circuit 10 may include a wireless charging transmitter circuit.

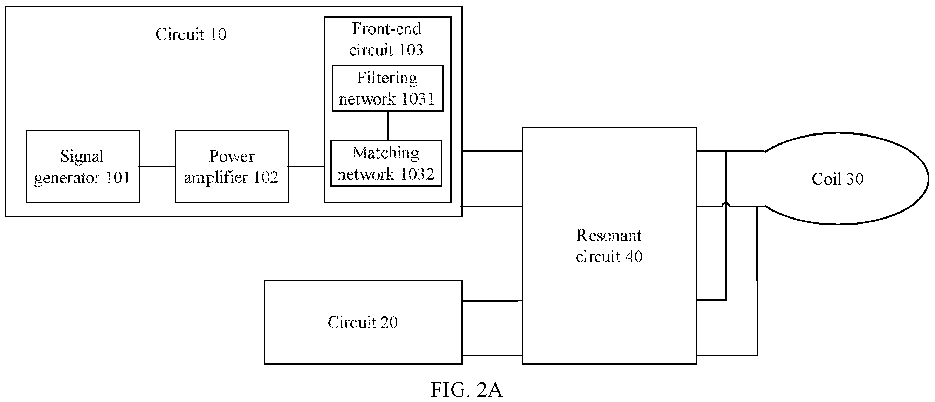

Optionally, as shown in FIG. 2A, the wireless charging transmitter circuit may include a signal generator 101, a power amplifier 102, and a front-end circuit 103 that are connected in series. The signal generator 101 may be implemented by using a crystal oscillator, a microcontroller, a digital signal processor, or the like, and is configured to generate a periodic signal related to a wireless charging signal. The power amplifier 102 may amplify the periodic signal generated by the signal generator 101. The front-end circuit 103 may include a filtering network 1031 and a matching network 1032. The filtering network 1031 is configured to filter out harmonics in a periodic signal amplified by the power amplifier 102, to generate a wireless charging signal. The matching network 1032 is configured to match input impedance to an expected input impedance range of the power amplifier 102.

Manner 2: When the electronic device is a receive end for wireless charging (for example, the electronic device is a device that supports wireless charging, for example, the electronic device is a mobile phone, a watch, a tablet computer, a headset, or a kitchen appliance), the circuit 10 may include a wireless charging receiver circuit.

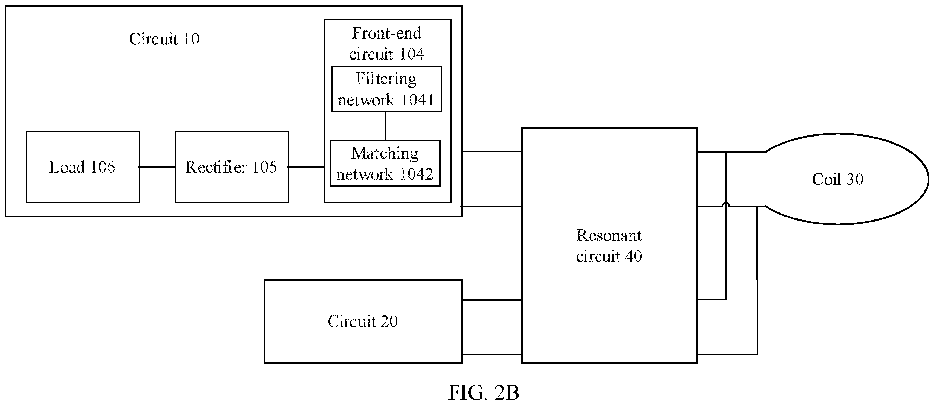

Optionally, as shown in FIG. 2B, the wireless charging receiver circuit may include a front-end circuit 104, a rectifier 105, and a load 106 that are connected in series. The front-end circuit 104 may include a filtering network 1041 and a matching network 1042. The matching network 1042 is configured to match impedance to an expected input impedance range of a wireless charging system. The filtering network 1041 is configured to filter out harmonics in a wireless charging signal. The rectifier 105 is configured to convert an alternating-current wireless charging signal into a direct-current signal, and then supply power to the load 106.

The circuit 20 may transmit a second signal through the coil 30. In other words, the circuit 20 may process the second signal, and the second signal may be transmitted through the coil 30. A frequency of the second signal is different from a frequency of the first signal. Optionally, the second signal may be one or more of an NFC signal and an RFID signal. For example, the second signal is one or more of an NFC signal at a frequency of 13.56 MHz and an RFID signal at a frequency of 125 kHz.

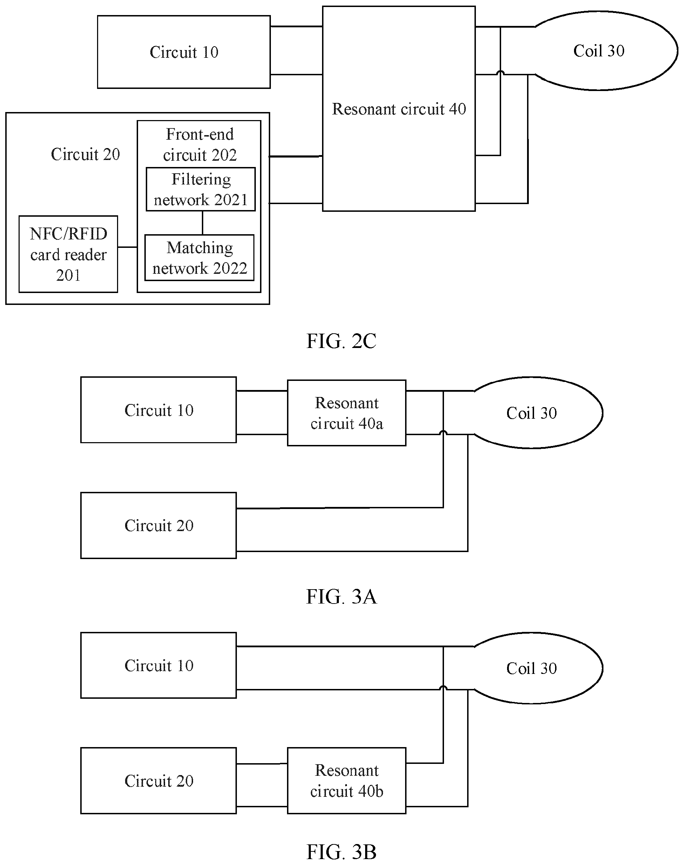

Optionally, the circuit 20 may be a radio frequency communication circuit. For example, the radio frequency communication circuit is an NFC/RFID circuit (or referred to as an NFC/RFID functional circuit). Optionally, as shown in FIG. 2C, the NFC/RFID circuit includes an NFC/RFID card reader 201 and a front-end circuit 202. The NFC/RFID card reader 201 may be implemented by using an integrated chip, and is configured to read and send one or more of an NFC signal and an RFID signal. The front-end circuit 202 may include a filtering network 2021 and a matching network 2022. The matching network 2022 is configured to match input impedance to an expected input impedance range of the NFC/RFID card reader. The filtering network 2021 is configured to filter out unexpected high-order harmonics in one or more of the NFC signal and the RFID signal.

Optionally, in this application, the one or more resonant circuits 40 may be disposed in one of the following implementations.

Implementation 1: The one or more resonant circuits 40 may be one resonant circuit. FIG. 3A and FIG. 3B each show a possible structure of the implementation 1.

As shown in FIG. 3A, the one or more resonant circuits 40 are a resonant circuit 40a. The resonant circuit 40a is disposed between the circuit 10 and the coil 30, and may be configured to prevent the second signal from passing. In the structure in FIG. 3A, the resonant circuit 40a can prevent the second signal from being transmitted to the circuit 10, to prevent the second signal from interfering with the circuit 10.

As shown in FIG. 3B, the one or more resonant circuits 40 are a resonant circuit 40b. The resonant circuit 40b is disposed between the circuit 20 and the coil 30, and may be configured to prevent the first signal from passing. In the structure in FIG. 3B, the resonant circuit 40b can prevent the first signal from being transmitted to the circuit 20, to prevent the first signal from interfering with the circuit 20.

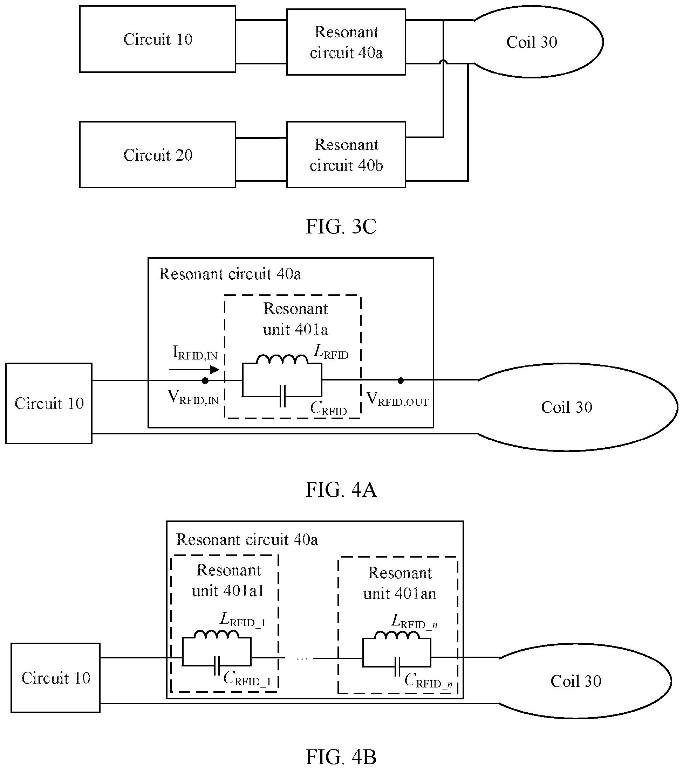

Implementation 2: The one or more resonant circuits 40 may be a plurality of resonant circuits, and the plurality of resonant circuits 40 are separately disposed between the circuit 10 and the coil 30, and between the circuit 20 and the coil 30. For example, as shown in FIG. 3C, the one or more resonant circuits 40 include a resonant circuit 40a and a resonant circuit 40b. For specific content of the resonant circuit 40a and the resonant circuit 40b, refer to the implementation 1. Details are not described herein again. In the implementation 2, the one or more resonant circuits 40 can prevent the first signal from being transmitted to the circuit 20, and prevent the second signal from being transmitted to the circuit 10, to prevent the first signal from interfering with the circuit 20 and prevent the second signal from interfering with the circuit 10.

Optionally, any one of the one or more resonant circuits 40 may include one or more resonant units, and any resonant unit may include an inductor L and a capacitor C that are connected in parallel. The inductor L in the any resonant unit 401 may be one inductor, or may be a plurality of inductors connected in series, in parallel, or in a hybrid manner. The capacitor C in the any resonant unit may be one capacitor, or may be a plurality of capacitors connected in series, in parallel, or in a hybrid manner. When a resonant circuit includes a plurality of resonant units, the plurality of resonant units may be connected in series.

In addition, a resonance frequency of a resonant circuit (namely, the resonant circuit 40a) disposed between the circuit 10 and the coil 30 may be the same as a frequency of the second signal, to prevent the second signal from passing; and a resonance frequency of a resonant circuit (namely, the resonant circuit 40b) disposed between the circuit 20 and the coil 30 may be the same as a frequency of the first signal, to prevent the first signal from passing. A resonance frequency of any one of the one or more resonant circuits 40 includes a resonance frequency of a resonant unit included in the resonant circuit.

FIG. 4A and FIG. 4B each show a possible structure of the resonant circuit 40a.

As shown in FIG. 4A, the resonant circuit 40a includes a resonant unit 401a. The resonant unit 401a includes an inductor and a capacitor that are connected in parallel. For example, a resonance frequency of the resonant unit 401a is the same as a frequency of an NFC signal or an RFID signal. It can be understood that a capacitance may be denoted as $C_{RFID}$ or $C_{NFC}$, and an inductance may be denoted as $L_{RFID}$ or $L_{NFC}$.

An RFID circuit is used as an example, and the resonance frequency of the resonant unit 401a is as follows:

$$f_{RFID} = \frac{1}{2\pi\sqrt{L_{RFID}C_{RFID}}};$$

and
impedance of the resonant unit 401a is as follows:

$$|Z_{RFID}| = \left| \frac{V_{RFID,IN} - V_{RFID,OUT}}{I_{RFID,IN}} \right|,$$

where
$V_{RFID,IN}$ is a voltage at one end of the resonant unit 401a, $V_{RFID,OUT}$ is a voltage at another end of the resonant unit 401a, and $I_{RFID,IN}$ is a current at one end of the resonant unit 401a. The impedance of the resonant unit 401a has the following characteristics: High impedance is presented for an NFC signal or an RFID signal (for example, an NFC signal at 13.56 MHz) at a same resonance frequency as that of the resonant unit 401a, to prevent the signal from passing, and further, eliminate impact of the NFC signal or the RFID signal on the circuit 10 (for example, a wireless charging transmitter circuit or a wireless charging receiver circuit). Low impedance is presented for a wireless charging signal, to avoid blocking transmission of the wireless charging signal.

In this embodiment of this application, the RFID signal is used merely as an example for description, but this does not mean that the circuit 20 needs to include an RFID circuit. In an embodiment, the circuit 20 may include only an NFC circuit, and the resonance frequency of the resonant unit 401a is the same as a frequency of an NFC signal. In an embodiment, the circuit 20 may include only an RFID circuit, and the resonance frequency of the resonant unit 401a is the same as a frequency of an RFID signal.

As shown in FIG. 4B, the resonant circuit 40a may include n resonant units connected in series: a resonant unit 401a1 to a resonant unit 401an, where n is a positive integer greater than 1. A resonant unit 401ai is any one of the n resonant units, and may include an inductor (with an inductance of $L_{RFID\_i}$) and a capacitor (with a capacitance of $C_{RFID\_i}$) that are connected in parallel, where $1 \leq i \leq n$. For specific content of the resonant unit 401ai, refer to the descriptions of the resonant unit 401a in FIG. 4A. Details are not described herein again.

In an embodiment, the circuit 20 may alternatively include both an NFC circuit and an RFID circuit. A resonance frequency of one of a plurality of resonant units of the resonant unit 401a may be the same as a frequency of an NFC signal, and a resonance frequency of another one of the plurality of resonant units of the resonant unit 401a may be the same as a frequency of an RFID signal.

In addition, in FIG. 4B, resonance frequencies of different resonant units may be the same or different. For example, the resonant unit 401ai and a resonant unit 401aj are different resonant units, where $1 \leq j \leq n$, and resonance frequencies of the resonant unit 401ai and the resonant unit 401aj are both 13.56 MHz, so that isolation for a signal at 13.56 MHz can be enhanced. For another example, a resonance frequency of the resonant unit 401ai is 13.56 MHz, and a resonance frequency of the resonant unit 401aj is 125 kHz, so that both a signal at 13.56 MHz and a signal at 125 kHz can be prevented from passing.

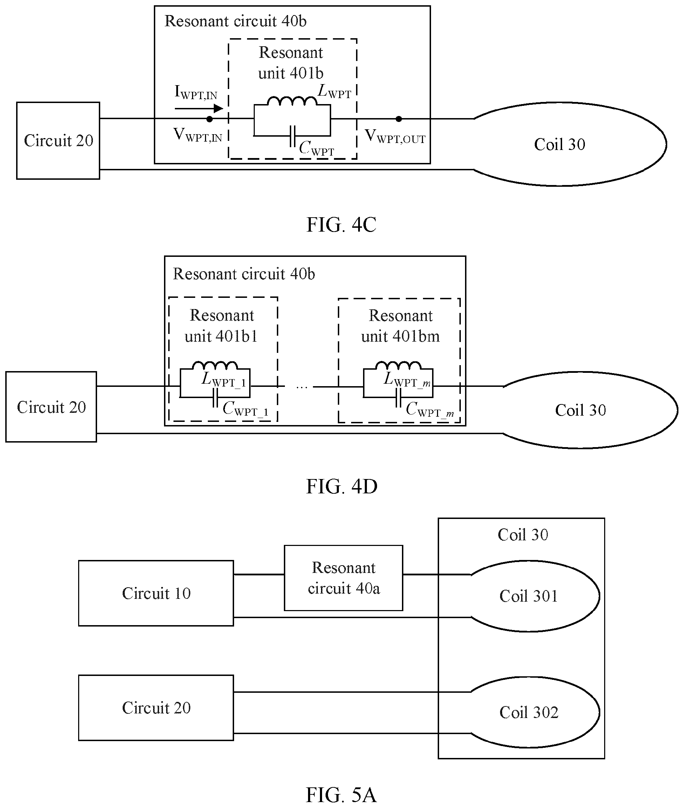

FIG. 4C and FIG. 4D each show a possible structure of the resonant circuit 40b.

As shown in FIG. 4C, the resonant circuit 40b includes a resonant unit 401b. The resonant unit 401b includes an inductor and a capacitor that are connected in parallel. For example, a resonance frequency of the resonant unit 401b is the same as a frequency of a wireless charging signal. It can be understood that a capacitance may be denoted as $C_{WPT}$, and an inductance may be denoted as $L_{WPT}$. For example, the resonance frequency of the resonance unit 401b is as follows:

$$f_{\text{WPT}} = \frac{1}{2\pi\sqrt{L_{\text{WPT}}C_{\text{WPT}}}} = 6.78\,\text{MHz};$$

and

impedance of the resonant unit 401b is as follows:

$$|Z_{\text{WPT}}| = \left|\frac{V_{\text{WPT,IN}} - V_{\text{WPT,OUT}}}{I_{\text{WPT,IN}}}\right|,$$

where

$V_{\text{WPT,IN}}$ is a voltage at one end of the resonant unit 401b, $V_{\text{WPT,OUT}}$ is a voltage at another end of the resonant unit 401b, and $I_{\text{WPT,IN}}$ is a current at one end of the resonant unit 401b. The impedance of the resonant unit has the following characteristics: High impedance is presented for a wireless charging signal (for example, a wireless charging signal at 6.78 MHz) at a same resonance frequency as that of the resonant unit 401b, to prevent the signal from passing, and further, eliminate impact of the wireless charging signal on the circuit 20 (for example, a radio frequency communication circuit). Low impedance is presented for an NFC signal or an RFID signal, to avoid blocking transmission of the NFC signal or the RFID signal.

As shown in FIG. 4D, the resonant circuit 40b may include m resonant units connected in series: a resonant unit 401b1 to a resonant unit 401bm, where m is a positive integer greater than 1. A resonant unit 401bk is any resonant unit in the resonant circuit 40b. The resonant unit 401bk may include an inductor and a capacitor that are connected in parallel. An inductance of the inductor is $L_{\text{WPT\_k}}$, and a capacitance of the capacitor is $C_{\text{WPT\_k}}$, where $1 \le k \le m$. For specific content of the resonant unit 401bk, refer to the descriptions of the resonant unit 401b in FIG. 4C. Details are not described herein again.

In addition, in FIG. 4D, resonance frequencies of different resonant units may be the same or different. For example, the resonant unit 401bk and a resonant unit 401bo are different resonant units, where $1 \le o \le m$, and resonance frequencies of the resonant unit 401bk and the resonant unit 401bo are both 6.78 MHz, so that isolation for a signal at 6.78 MHz can be enhanced. For another example, a resonance frequency of the resonant unit 401bk is 6.78 MHz, and a resonance frequency of the resonant unit 401bo is 100 kHz, so that both a signal at 6.78 MHz and a signal at 100 kHz can be prevented from passing.

The coil 30 may also be referred to as an antenna, and may be configured to transmit one or more of the first signal and the second signal. For example, when the electronic device is a signal transmit end, the coil 30 may convert one or more of the first signal and the second signal into magnetic energy, and transmit the magnetic energy. For another example, when the electronic device is a signal receive end, the coil may convert one or more of the first signal and the second signal in a magnetic energy form into an electrical signal.

In some possible manners, the coil 30 may be one coil, and the coil 30 is configured to transmit the first signal and the second signal. The following describes a connection relationship between the coil 30 and other elements in the electronic device.

When the resonant circuit 40a is disposed between the coil 30 and the circuit 10, one end (referred to as a first end below) of the coil 30 may be connected to the circuit 10, another end (referred to as a second end below) of the coil 30 may be connected to one end of the resonant circuit 40a, and another end of the resonant circuit 40a is connected to the circuit 10 (as shown in FIG. 4A or FIG. 4B). When no resonant circuit 40a is disposed between the coil 30 and the circuit 10, both ends of the coil 30 may be connected to the circuit 10, to form a loop with the circuit 10 (as shown in FIG. 3B).

Optionally, when the coil 30 is connected to the circuit 10, the coil 30 may be connected to a front-end circuit (for example, the front-end circuit 103 in FIG. 2A or the front-end circuit 104 in FIG. 2B) in a wireless charging circuit. For example, the coil 30 may be connected to a matching network (for example, the matching network 1032 in FIG. 2A or the matching network 1042 in FIG. 2B) in the wireless charging circuit. When the resonant circuit 40a is connected to the circuit 10, the resonant circuit 40a may be connected to the front-end circuit (for example, the front-end circuit 103 in FIG. 2A or the front-end circuit 104 in FIG. 2B) in the wireless charging circuit. For example, the resonant circuit 40a may be connected to the matching network (for example, the matching network 1032 in FIG. 2A or the matching network 1042 in FIG. 2B) in the wireless charging circuit.

When the resonant circuit 40b is disposed between the coil 30 and the circuit 20, one end (referred to as a third end below) of the coil 30 may be connected to the circuit 20, another end (referred to as a fourth end below) of the coil 30 may be connected to one end of the resonant circuit 40b, and another end of the one end of the resonant circuit 40b is connected to the circuit 20 (as shown in FIG. 4C or FIG. 4D). When no resonant circuit 40b is disposed between the coil 30 and the circuit 20, both ends of the coil 30 may be connected to the circuit 20, to form a loop with the circuit 20 (as shown in FIG. 3A).

Optionally, when the coil 30 is connected to the circuit 20, the coil 30 may be connected to a front-end circuit (for example, the front-end circuit 202 in FIG. 2C) in a radio frequency communication circuit. For example, the coil 30 may be connected to a matching network (for example, the matching network 2022 in FIG. 2C) in the radio frequency communication circuit. When the resonant circuit 40b is connected to the circuit 20, the resonant circuit 40b may be connected to the front-end circuit (for example, the front-end circuit 202 in FIG. 2C) in the radio frequency communication circuit. For example, the resonant circuit 40b may be connected to the matching network (for example, the matching network 2022 in FIG.

2C) in the radio frequency communication circuit.

The third end and the first end of the coil 30 are the same, and the fourth end and the second end of the coil 30 are the same; or the third end and the second end of the coil 30 are the same, and the fourth end and the first end of the coil 30 are the same. In other words, the resonant circuit 40a and the resonant circuit 40b may be connected to a same end of the coil 30, or may be separately connected to different ends of the coil 30.

In some other possible manners, the coil 30 includes a coil 301 and a coil 302. The coil 301 may be configured to transmit the first signal, and the coil 302 may be configured to transmit the second signal. When the one or more resonant circuits 40 are one resonant circuit, the one resonant circuit is disposed between the circuit 10 and the coil 301, or the one resonant circuit is disposed between the circuit 20 and the coil 302. When the one or more resonant circuits 40 are a plurality of resonant circuits, the plurality of resonant circuits 40 are separately disposed between the circuit 10 and the coil 301, and between the circuit 20 and the coil 302.

The following describes a connection relationship between the coil 301 and other elements in the electronic device, and a connection relationship between the coil 302 and other elements in the electronic device.

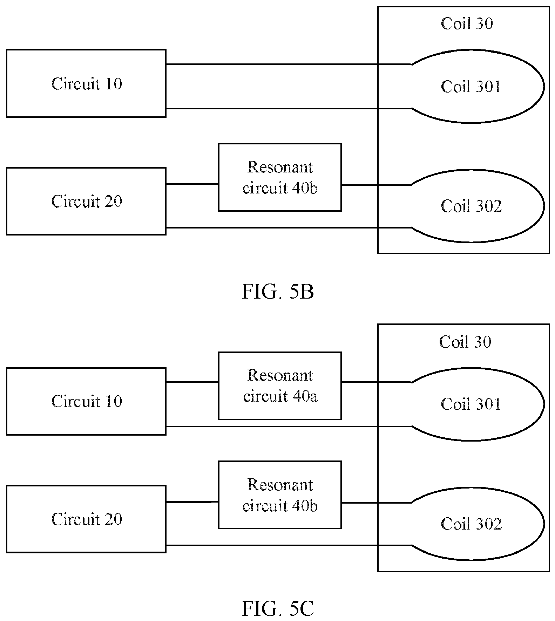

When the resonant circuit 40a is disposed between the coil 301 and the circuit 10, one end of the coil 301 may be connected to the circuit 10, another end of the coil 301 may be connected to one end of the resonant circuit 40a, and another end of the resonant circuit 40a is connected to the circuit 10 (as shown in FIG. 5A or FIG. 5C). When no resonant circuit 40a is disposed between the coil 301 and the circuit 10, both ends of the coil 301 may be connected to the circuit 10, to form a loop with the circuit 10 (as shown in FIG. 5B).

Optionally, when the coil 301 is connected to the circuit 10, the coil 301 may be connected to a front-end circuit (for example, the front-end circuit 103 in FIG. 2A or the front-end circuit 104 in FIG. 2B) in a wireless charging circuit. For example, the coil 301 may be connected to a matching network (for example, the matching network 1032 in FIG. 2A or the matching network 1042 in FIG. 2B) in the wireless charging circuit. When the resonant circuit 40a is connected to the circuit 10, the resonant circuit 40a may be connected to the front-end circuit (for example, the front-end circuit 103 in FIG. 2A or the front-end circuit 104 in FIG. 2B) in the wireless charging circuit. For example, the resonant circuit 40a may be connected to the matching network (for example, the matching network 1032 in FIG. 2A or the matching network 1042 in FIG. 2B) in the wireless charging circuit.

When the resonant circuit 40b is disposed between the coil 302 and the circuit 20, one end of the coil 302 may be connected to the circuit 20, another end of the coil 302 may be connected to one end of the resonant circuit 40b, and another end of the one end of the resonant circuit 40b is connected to the circuit 20 (as shown in FIG. 5B or FIG. 5C). When no resonant circuit 40b is disposed between the coil 302 and the circuit 20, both ends of the coil 302 may be connected to the circuit 20, to form a loop with the circuit 20 (as shown in FIG. 5A).

Optionally, when the coil 302 is connected to the circuit 20, the coil 302 may be connected to a front-end circuit (for example, the front-end circuit 202 in FIG. 2C) in a radio frequency communication circuit. For example, the coil 302 may be connected to a matching network (for example, the matching network 2022 in FIG. 2C) in the radio frequency communication circuit. When the resonant circuit 40b is connected to the circuit 20, the resonant circuit 40b may be connected to the front-end circuit (for example, the front-end circuit 202 in FIG. 2C) in the radio frequency communication circuit. For example, the resonant circuit 40b may be connected to the matching network (for example, the matching network 2022 in FIG. 2C) in the radio frequency communication circuit.

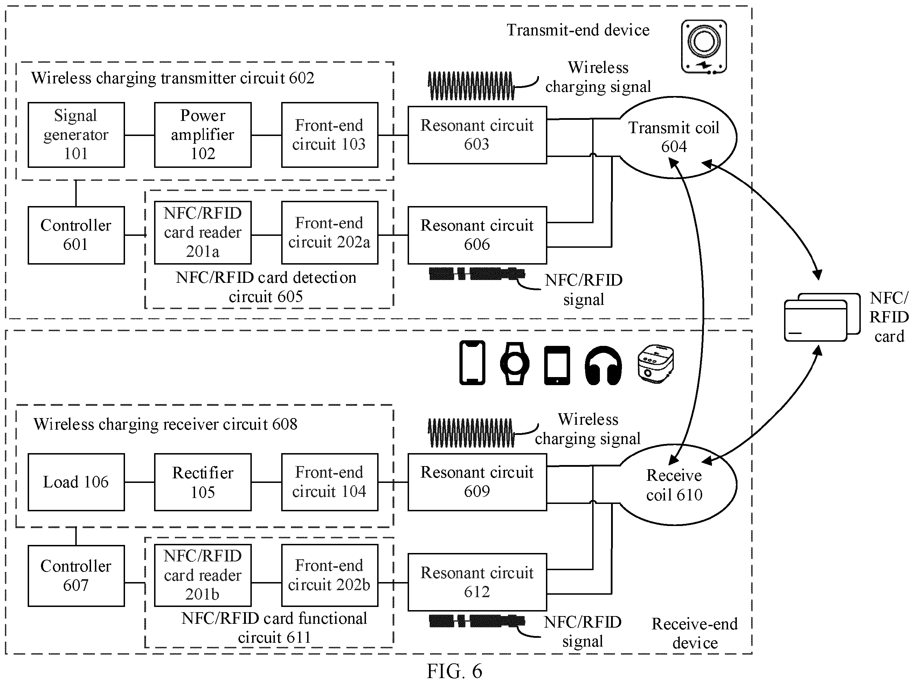

FIG. 6 is a schematic diagram of an example in which the electronic device shown in FIG. 1 to FIG. 5C is used in a wireless charging system according to this application. With reference to FIG. 6, the following describes application of the electronic device shown in FIG. 1 to FIG. 5C in an application scenario shown in FIG. 6.

The wireless charging system shown in FIG. 6 includes a transmit-end device (which may also be referred to as a transmitter-end device, a transmit end, or a transmitting end) and a receive-end device (which may also be referred to as a receive end). Both the transmit-end device and the receive-end device can implement the functions of the electronic device shown in FIG. 1 to FIG. 5C. This is described in detail below.

The transmit-end device may include a wireless charging base. As shown in FIG. 6, the transmit-end device may further include a controller 601, a wireless charging transmitter circuit 602, a resonant circuit 603, a transmit coil 604, an NFC/RFID card detection circuit 605, and a resonant circuit 606.

The controller 601 may be implemented by using a microcontroller, a digital signal processor, or the like, and is mainly responsible for controlling functions, such as enabling, disabling, signal strength adjustment, and impedance detection, of the wireless charging transmitter circuit 602 and the NFC/RFID card detection circuit 605. For example, when detecting an NFC/RFID card, the transmit-end device may send, by using the controller 601, an instruction for weakening or disabling a wireless charging signal, to protect the NFC/RFID card.

The wireless charging transmitter circuit 602 may include a signal generator 101, a power amplifier 102, and a front-end circuit 103. The NFC/RFID card detection circuit 605 may include an NFC/RFID card reader 201a and a front-end circuit 202a. For specific content of the wireless charging transmitter circuit 602, the resonant circuit 603, the transmit coil 604, the NFC/RFID card detection circuit 605, and the resonant circuit 606, respectively refer to the descriptions of the circuit 10, the resonant circuit 40a, the coil 30, the circuit 20, and the resonant circuit 40b in the electronic device shown in FIG. 1 to FIG. 5C. Details are not described herein again.

When the transmit-end device is configured to implement the functions of the electronic device shown in FIG. 1 to FIG. 5C, the resonant circuit 603 may prevent an NFC signal or an RFID signal from passing, so as to prevent the NFC signal or the RFID signal from entering the wireless charging transmitter circuit 602, without blocking transmission of a wireless charging signal. The resonant circuit 606 may prevent a wireless charging signal from passing, so as to prevent the wireless charging signal from entering the NFC/RFID card detection circuit 605, without blocking transmission of an NFC signal or an RFID signal.

The receive-end device may include at least one of an electronic device or an electrical device that supports a wireless charging or NFC/RFID function. For example, the receive-end device may include but is not limited to at least one of the following: a mobile phone, a watch, a tablet computer, a headset, a kitchen appliance, and the like. As shown in FIG. 6, the receive-end device may include a controller 607, a wireless charging receiver circuit 608, a resonant circuit 609, a receive coil 610, an NFC/RFID functional circuit 611, and a resonant circuit 612.

The controller 607 may be implemented by using a microcontroller, a digital signal processor, or the like, and is mainly responsible for controlling functions, such as enabling, disabling, signal strength adjustment, and impedance detection, of the wireless charging receiver circuit 608 and the NFC/RFID functional circuit 611. For example, when detecting an NFC/RFID card, the receive-end device may send, by using the controller 607, an instruction for weakening or disabling a wireless charging signal, to protect the NFC/RFID card.

The wireless charging receiver circuit 608 may include a front-end circuit 104, a rectifier 105, and a load 106. The NFC/RFID functional circuit 611 may include an NFC/RFID card reader 201b and a front-end circuit 202b. For specific content of the wireless charging receiver circuit 608, the resonant circuit 609, the receive coil 610, the NFC/RFID functional circuit 611, and the resonant circuit 612, respectively refer to the descriptions of the circuit 10, the resonant circuit 40a, the coil 30, the circuit 20, and the resonant circuit 40b in the electronic device shown in FIG. 1 to FIG. 5C. Details are not described herein again.

When the receive-end device is configured to implement the functions of the electronic device shown in FIG. 1 to FIG. 5C, the resonant circuit 609 may prevent an NFC signal or an RFID signal from passing, so as to prevent the NFC signal or the RFID signal from entering the wireless charging receiver circuit 608, without blocking transmission of a wireless charging signal. The resonant circuit 612 may prevent a wireless charging signal from passing, so as to prevent the wireless charging signal from entering the NFC/RFID functional circuit 611, without blocking transmission of an NFC signal or an RFID signal.

Optionally, in the system shown in FIG. 6, the transmit-end device may alternatively include the resonant circuit 603 or the resonant circuit 606. For example, the transmit-end device includes the resonant circuit 603, and the transmit coil 604 is directly connected to the NFC/RFID card detection circuit 605 (for example, the transmit coil 604 is directly connected to the front-end circuit 202a). For another example, the transmit-end device may alternatively include the resonant circuit 606, and the transmit coil 604 is directly connected to the wireless charging transmitter circuit 602 (for example, the transmit coil 604 is directly connected to the front-end circuit 103).

In addition, the receive-end device may alternatively include the resonant circuit 609 or the resonant circuit 612. For example, the receive-end device includes the resonant circuit 609, and the receive coil 610 is directly connected to the NFC/RFID functional circuit 611 (for example, the transmit coil 604 is directly connected to the front-end circuit 202b). For another example, the receive-end device includes the resonant circuit 612, and the receive coil 610 is directly connected to the wireless charging receiver circuit 608 (for example, the transmit coil 604 is directly connected to the front-end circuit 104).

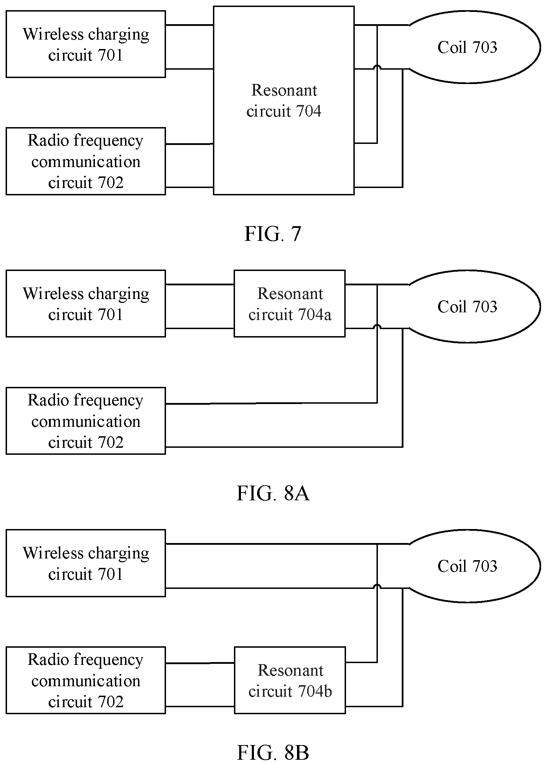

An embodiment of this application further provides an electronic device. As shown in FIG. 7, the electronic device may include a wireless charging circuit 701, a radio frequency communication circuit 702, a coil 703, and one or more resonant circuits 704. The wireless charging circuit 701 may transmit a wireless charging signal through the coil 703, and the radio frequency communication circuit 702 may transmit one or more of an NFC signal and an RFID signal through the coil 703.

Optionally, in this application, the one or more resonant circuits 704 may be disposed in one of the following implementations.

Implementation 1: The one or more resonant circuits 704 may be one resonant circuit. FIG. 8A and FIG. 8B each show a possible structure of the implementation 1.

As shown in FIG. 8A, the one or more resonant circuits 704 are a resonant circuit 704a. The resonant circuit 704a is disposed between the wireless charging circuit 701 and the coil 703, and may be configured to prevent the NFC signal and the RFID signal from passing. In the structure in FIG. 8A, the resonant circuit 704a can prevent the NFC signal and the RFID signal from being transmitted to the wireless charging circuit 701, to prevent the NFC signal and the RFID signal from interfering with the wireless charging circuit 701.

As shown in FIG. 8B, the one or more resonant circuits 704 are a resonant circuit 704b. The resonant circuit 704b is disposed between the radio frequency communication circuit 702 and the coil 703, and may be configured to prevent the wireless charging signal from passing. In the structure in FIG. 8B, the resonant circuit 704b can prevent the wireless charging signal from being transmitted to the radio frequency communication circuit 702, to prevent the wireless charging signal from interfering with the radio frequency communication circuit 702.

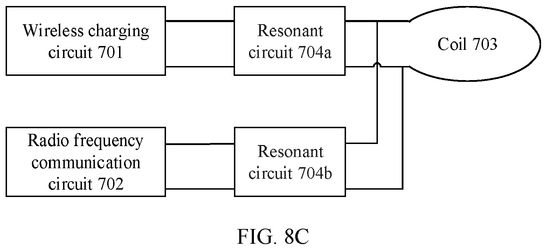

Implementation 2: The one or more resonant circuits 704 may be a plurality of resonant circuits, and the plurality of resonant circuits 704 are separately disposed between the wireless charging circuit 701 and the coil 702, and between the radio frequency communication circuit 702 and the coil 703. For example, as shown in FIG. 8C, the one or more resonant circuits 704 include a resonant circuit 704a and a resonant circuit 704b. For specific content of the resonant circuit 704a and the resonant circuit 704b, refer to the implementation 1. Details are not described herein again. In the implementation 2, the one or more resonant circuits 704 can prevent the NFC signal and the RFID signal from being transmitted to the wireless charging circuit 701, and prevent the wireless charging signal from being transmitted to the radio frequency communication circuit 702, to prevent the NFC signal and the RFID signal from interfering with the wireless charging circuit 701 and prevent the wireless charging signal from interfering with the radio frequency communication circuit 702.

For specific content of the wireless charging circuit 701, the radio frequency communication circuit 702, the coil 703, and the one or more resonant circuits 704, respectively refer to the descriptions of the circuit 10, the circuit 20, the coil 30, and the one or more resonant circuits 40 in FIG. 1 to FIG. 5C. Details are not described herein again.

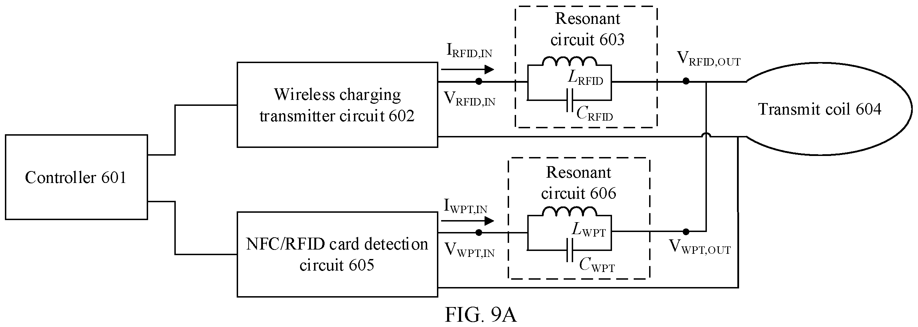

The following describes possible implementations of the electronic device shown in FIG. 1 to FIG. 5C or the electronic device shown in FIG. 7 to FIG. 8C by using an example in which the electronic device is a transmit-end device, the first signal is a wireless charging signal, and the second signal is one or more of an NFC signal and an RFID signal. FIG. 9A, FIG. 10A, and FIG. 11 each show a possible implementation of the electronic device shown in FIG. 1 to FIG. 5C or the electronic device shown in FIG. 7 to FIG. 8C.

As shown in FIG. 9A, the electronic device includes a controller 601, a wireless charging transmitter circuit 602, a resonant circuit 603, a transmit coil 604, an NFC/RFID card detection circuit 605, and a resonant circuit 606. For specific content of the controller 601, the wireless charging transmitter circuit 602, the transmit coil 604, and the NFC/RFID card detection circuit 605, refer to the descriptions of FIG. 6. For specific content of the resonant circuit 603, refer to the descriptions of the resonant circuit 40a in FIG. 4A. For specific content of the resonant circuit 606, refer to the descriptions of the resonant circuit 40b in FIG. 4C. Details are not described herein again.

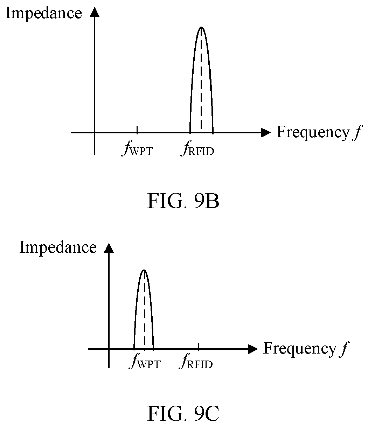

FIG. 9B and FIG. 9C show impedance of the resonant circuit 603 and the resonant circuit 606 for signals at different frequencies. For example, RFID is used as an example, and a resonance frequency of the resonant circuit 603 may be as follows:

$$f_{\mathrm{RFID}} = \frac{1}{2\pi\sqrt{L_{\mathrm{RFID}}C_{\mathrm{RFID}}}}$$

The resonant circuit 603 presents high impedance for a signal at a frequency of $f_{\mathrm{RFID}}$, that is, the resonant circuit 603 is turned off for a signal at a frequency of $f_{\mathrm{RFID}}$, to prevent the signal at a frequency of $f_{\mathrm{RFID}}$ from passing, without preventing a signal at another frequency from passing. For example, the resonant circuit 603 does not prevent a signal at a frequency of $f_{\mathrm{WPT}}$ from passing.

For example, a resonance frequency of the resonant circuit 606 is as follows:

$$f_{\mathrm{WPT}} = \frac{1}{2\pi\sqrt{L_{\mathrm{WPT}}C_{\mathrm{WPT}}}}$$

The resonant circuit 606 presents high impedance for a signal at a frequency of $f_{\mathrm{WPT}}$, that is, the resonant circuit 606 is turned off for a signal at a frequency of $f_{\mathrm{WPT}}$, to prevent the signal at a frequency of $f_{\mathrm{WPT}}$ from passing, without preventing a signal at another frequency from passing. For example, the resonant circuit 606 does not prevent a signal at a frequency of $f_{\mathrm{RFID}}$ from passing.

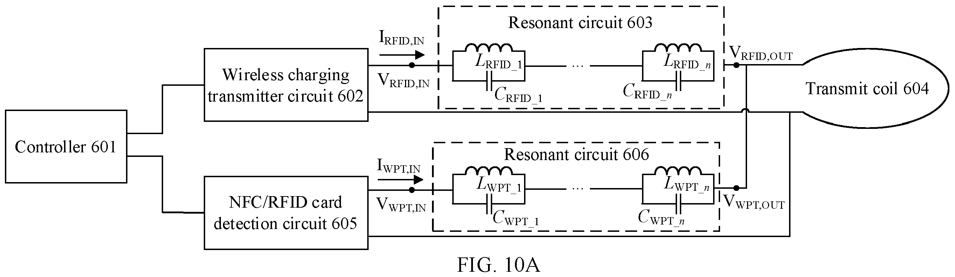

As shown in FIG. 10A, the electronic device includes a controller 601, a wireless charging transmitter circuit 602, a resonant circuit 603, a transmit coil 604, an NFC/RFID card detection circuit 605, and a resonant circuit 606. For specific content of the controller 601, the wireless charging transmitter circuit 602, the transmit coil 604, and the NFC/RFID card detection circuit 605, refer to the descriptions of FIG. 6. For specific content of the resonant circuit 603, refer to the descriptions of the resonant circuit 40b in FIG. 4B. For specific content of the resonant circuit 606, refer to the descriptions of the resonant circuit 40b in FIG. 4D. Details are not described herein again.

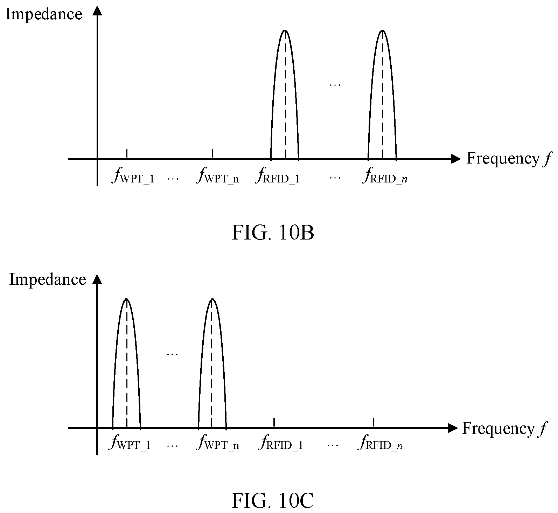

FIG. 10B and FIG. 10C show impedance of the resonant circuit 603 and the resonant circuit 606 for signals at different frequencies. For example, RFID is used as an example, and a resonance frequency of the resonant circuit 603 may include:

$$f_{\mathrm{RFID\_i}} = \frac{1}{2\pi\sqrt{L_{\mathrm{RFID\_i}}C_{\mathrm{RFID\_i}}}}$$

The resonant circuit 603 presents high impedance for a signal at a frequency of $f_{\mathrm{RFID\_i}}$, that is, the resonant circuit 603 is turned off for a signal at a frequency of $f_{\mathrm{RFID\_i}}$, to prevent the signal at a frequency of $f_{\mathrm{RFID\_i}}$ from passing, without preventing a signal at another frequency from passing. For example, the resonant circuit 603 does not prevent a signal at a frequency of $f_{\mathrm{WPT\_k}}$ from passing.

For example, a resonance frequency of the resonant circuit 606 is as follows:

$$f_{WPT\_k} = \frac{1}{2\pi\sqrt{L_{WPT\_k}C_{WPT\_k}}}$$

The resonant circuit 606 presents high impedance for a signal at a frequency of $f_{WPT\_k}$, that is, the resonant circuit 606 is turned off for a signal at a frequency of $f_{WPT\_k}$, to prevent the signal at a frequency of $f_{WPT\_k}$ from passing, without preventing a signal at another frequency from passing. For example, the resonant circuit 606 does not prevent a signal at a frequency of $f_{RFID\_i}$ from passing.

In addition, in the electronic device shown in FIG. 10A, when different resonant units in the resonant circuit 603 have a same resonance frequency, isolation for an NFC signal and an RFID signal at the same resonance frequency can be enhanced; or when different resonant units in the resonant circuit 603 have different resonance frequencies, NFC signals and RFID signals at different frequencies can be isolated, that is, NFC signals and RFID signals at different frequencies are prevented from passing. When different resonant units in the resonant circuit 606 have a same resonance frequency, isolation for a wireless charging signal at the same resonance frequency can be enhanced; or when different resonant units in the resonant circuit 606 have different resonance frequencies, wireless charging signals at different frequencies can be isolated, that is, wireless charging signals at different frequencies are prevented from passing.

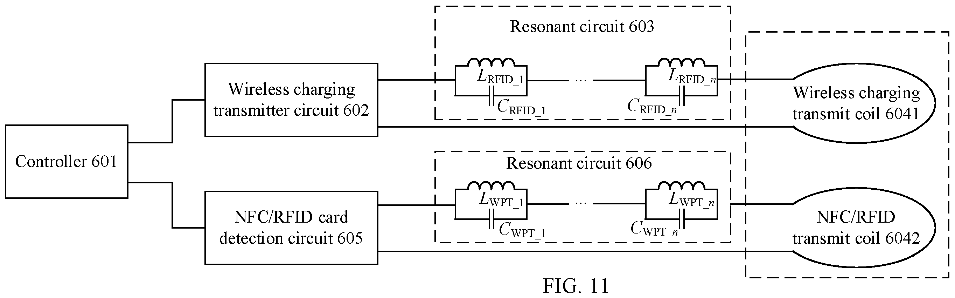

As shown in FIG. 11, the electronic device includes a controller 601, a wireless charging transmitter circuit 602, a resonant circuit 603, a wireless charging transmit coil 6041, an NFC/RFID transmit coil 6042, an NFC/RFID card detection circuit 605, and a resonant circuit 606. For specific content of the controller 601, the wireless charging transmitter circuit 602, and the NFC/RFID card detection circuit 605, refer to the descriptions of FIG. 6. For specific content of the resonant circuit 603, refer to the descriptions of the resonant circuit 40b in FIG. 4B. For specific content of the resonant circuit 606, refer to the descriptions of the resonant circuit 40b in FIG. 4D. For specific content of the wireless charging transmit coil 6041 and the NFC/RFID transmit coil 6042, respectively refer to the descriptions of the coil 301 and the coil 302. Details are not described herein again.

The electronic device shown in FIG. 11 can implement the effects of the electronic device shown in FIG. 10A. Details are not described herein again. In addition, the electronic device shown in FIG. 11 may be used in an electronic device including a plurality of coils.

Clearly, a person skilled in the art can make various modifications and variations to this application without departing from the scope of this application. This application is intended to cover these modifications and variations of this application provided that they fall within the scope of the claims of this application and equivalent technologies thereof.

**Claims**

1. An electronic device, comprising a first circuit, a second circuit, a coil, and one or more resonant circuits, wherein the first circuit transmits a first signal through the coil, the second circuit transmits a second signal through the coil, and frequencies of the first signal and the second signal are different; and

   the one resonant circuit is disposed between the first circuit and the coil, or between the second circuit and the coil; or the plurality of resonant circuits are separately disposed between the first circuit and the coil, and between the second circuit and the coil, wherein
   a resonant circuit disposed between the first circuit and the coil is configured to prevent the second signal from passing, and a resonant circuit disposed between the second circuit and the coil is configured to prevent the first signal from passing.

2. The electronic device according to claim 1, wherein the resonant circuit comprises one or more resonant units, and the resonant unit comprises an inductor and a capacitor that are connected in parallel, wherein
   a resonance frequency of the resonant circuit disposed between the first circuit and the coil is the same as a frequency of the second signal, and a resonance frequency of the resonant circuit disposed between the second circuit and the coil is the same as a frequency of the first signal.

3. The electronic device according to claim 1 or 2, wherein the first signal is a wireless charging signal, and the second signal is one or more of a near-field communication signal and a radio frequency identification signal.

4. The electronic device according to any one of claims 1 to 3, wherein the electronic device is a transmit end for wireless charging, and the first circuit comprises a wireless charging transmitter circuit; or the electronic device is a receive end for wireless charging, and the first circuit comprises a wireless charging receiver circuit.

5. The electronic device according to any one of claims 1 to 4, wherein the electronic device is an electronic device for near-field communication or radio frequency identification, and the second circuit comprises a radio frequency communication circuit.

**6.** The electronic device according to any one of claims 1 to 5, wherein the coil comprises a first coil configured to transmit the first signal, and a second coil configured to transmit the second signal; and
the one resonant circuit is disposed between the first circuit and the first coil, or between the second circuit and the second coil; or the plurality of resonant circuits are separately disposed between the first circuit and the first coil, and between the second circuit and the second coil.

**7.** An electronic device, comprising a wireless charging circuit, a radio frequency communication circuit, a coil, and one or more resonant circuits, wherein the wireless charging circuit transmits a wireless charging signal through the coil, and the radio frequency communication circuit transmits one or more of a near-field communication signal and a radio frequency identification signal through the coil; and

the one resonant circuit is disposed between the wireless charging circuit and the coil, or between the radio frequency communication circuit and the coil; or the plurality of resonant circuits are separately disposed between the wireless charging circuit and the coil, and between the radio frequency communication circuit and the coil, wherein
a resonant circuit disposed between the wireless charging circuit and the coil is configured to prevent the near-field communication signal and the radio frequency identification signal from passing, and a resonant circuit disposed between the radio frequency communication circuit and the coil is configured to prevent the wireless charging signal from passing.

**8.** The electronic device according to claim 7, wherein

the electronic device is a transmit end for wireless charging, and the wireless charging circuit comprises a signal generator, a power amplifier, a filtering network, and a matching network; or the electronic device is a receive end for wireless charging, and the wireless charging circuit comprises a load, a rectifier, a filtering network, and a matching network.

**9.** The electronic device according to claim 7 or 8, wherein the electronic device is an electronic device for near-field communication or radio frequency identification, and the radio frequency communication circuit comprises a near-field communication or radio frequency identification card reader, a filtering network, and a matching network.

**10.** The electronic device according to any one of claims 7 to 9, wherein the resonant circuit disposed between the wireless charging circuit and the coil is connected to the matching network in the wireless charging circuit, and the resonant circuit disposed between the radio frequency communication circuit and the coil is connected to the matching network in the radio frequency communication circuit.

**11.** The electronic device according to any one of claims 7 to 10, wherein the resonant circuit comprises one or more resonant units, and the resonant unit comprises an inductor and a capacitor that are connected in parallel.

**12.** The electronic device according to any one of claims 7 to 11, wherein the resonant circuit disposed between the wireless charging circuit and the coil is connected to one end of the coil, and another end of the coil is connected to the matching network in the wireless charging circuit; and the resonant circuit disposed between the radio frequency communication circuit and the coil is connected to one end of the coil, and another end of the coil is connected to the matching network in the radio frequency communication circuit.

**13.** The electronic device according to any one of claims 7 to 12, wherein the coil comprises a first coil configured to transmit the wireless charging signal, and a second coil configured to transmit one or more of the near-field communication signal and the radio frequency identification signal; and
the one resonant circuit is disposed between the wireless charging circuit and the first coil, or between the radio frequency communication circuit and the second coil; or the plurality of resonant circuits are separately disposed between the wireless charging circuit and the first coil, and between the radio frequency communication circuit and the second coil.

**14.** The electronic device according to claim 13, wherein

a resonant circuit disposed between the wireless charging circuit and the first coil is connected to one end of the first coil, and another end of the first coil is connected to the matching network in the wireless charging circuit; and
a resonant circuit disposed between the radio frequency communication circuit and the second coil is connected to one end of the second coil, and another end of the second coil is connected to the matching network in the radio frequency communication circuit.

FIG. 1

FIG. 2A

FIG. 2B

FIG. 2C

FIG. 3A

FIG. 3B

Circuit 10 — Resonant circuit 40a — Coil 30

Circuit 20 — Resonant circuit 40b

FIG. 3C

Resonant circuit 40a

Resonant unit 401a

Circuit 10

$I_{RFID,IN}$

$V_{RFID,IN}$

$L_{RFID}$

$C_{RFID}$

$V_{RFID,OUT}$

Coil 30

FIG. 4A

Resonant circuit 40a

Resonant unit 401a1

$L_{RFID\_1}$

$C_{RFID\_1}$

Resonant unit 401an

$L_{RFID\_n}$

$C_{RFID\_n}$

Circuit 10

...

Coil 30

FIG. 4B

Resonant circuit 40b

Resonant
unit 401b

$I_{WPT,IN}$ $L_{WPT}$

Circuit 20

$V_{WPT,IN}$ $V_{WPT,OUT}$

$C_{WPT}$

Coil 30

FIG. 4C

Resonant circuit 40b

Resonant
unit 401b1

Resonant
unit 401bm

Circuit 20

$L_{WPT\_1}$ ... $L_{WPT\_m}$

$C_{WPT\_1}$ $C_{WPT\_m}$

Coil 30

FIG. 4D

Coil 30

Circuit 10

Resonant
circuit 40a

Coil 301

Circuit 20

Coil 302

FIG. 5A

Coil 30

Circuit 10

Coil 301

Resonant
circuit 40b

Circuit 20

Coil 302

FIG. 5B

Coil 30

Resonant
circuit 40a

Circuit 10

Coil 301

Resonant
circuit 40b

Circuit 20

Coil 302

FIG. 5C

FIG. 6

```
┌──────────────────┐     ┌──────────────────┐
│ Wireless charging│─────│                  │      ╭──────────╮
│   circuit 701    │─────│                  │──────│          │
└──────────────────┘     │    Resonant      │      │ Coil 703 │
                         │   circuit 704    │      │          │
┌──────────────────┐     │                  │      ╰──────────╯
│ Radio frequency  │─────│                  │
│  communication   │─────│                  │
│   circuit 702    │     └──────────────────┘
└──────────────────┘
```

FIG. 7

```
┌──────────────────┐     ┌──────────────┐
│ Wireless charging│─────│   Resonant   │      ╭──────────╮
│   circuit 701    │─────│  circuit 704a│──────│          │
└──────────────────┘     └──────────────┘      │ Coil 703 │
                                               │          │
┌──────────────────┐                           ╰──────────╯
│ Radio frequency  │
│  communication   │───────────────────────────────
│   circuit 702    │
└──────────────────┘
```

FIG. 8A

```
┌──────────────────┐                           ╭──────────╮
│ Wireless charging│───────────────────────────│          │
│   circuit 701    │───────────────────────────│ Coil 703 │
└──────────────────┘                           │          │
                                               ╰──────────╯
┌──────────────────┐     ┌──────────────┐
│ Radio frequency  │─────│   Resonant   │
│  communication   │─────│  circuit 704b│
│   circuit 702    │     └──────────────┘
└──────────────────┘
```

FIG. 8B

FIG. 8C

FIG. 9A

Impedance

$f_{WPT}$    $f_{RFID}$    Frequency $f$

FIG. 9B

Impedance

$f_{WPT}$    $f_{RFID}$    Frequency $f$

FIG. 9C

Controller 601

Wireless charging transmitter circuit 602

NFC/RFID card detection circuit 605

$I_{RFID,IN}$

$V_{RFID,IN}$

$I_{WPT,IN}$

$V_{WPT,IN}$

Resonant circuit 603

$L_{RFID\_1}$  $C_{RFID\_1}$  ...  $L_{RFID\_n}$  $C_{RFID\_n}$

Resonant circuit 606

$L_{WPT\_1}$  $C_{WPT\_1}$  ...  $L_{WPT\_n}$  $C_{WPT\_n}$

$V_{RFID,OUT}$

$V_{WPT,OUT}$

Transmit coil 604

FIG. 10A

Impedance

$f_{WPT\_1}$ ··· $f_{WPT\_n}$ $f_{RFID\_1}$ ··· $f_{RFID\_n}$ Frequency $f$

FIG. 10B

Impedance

$f_{WPT\_1}$ ··· $f_{WPT\_n}$ $f_{RFID\_1}$ ··· $f_{RFID\_n}$ Frequency $f$

FIG. 10C

EP 4 307 518 A1

Resonant circuit 603

$L_{\text{RFID\_1}}$ ... $L_{\text{RFID\_}n}$

$C_{\text{RFID\_1}}$ $C_{\text{RFID\_}n}$

Resonant circuit 606

$L_{\text{WPT\_1}}$ ... $L_{\text{WPT\_}n}$

$C_{\text{WPT\_1}}$ $C_{\text{WPT\_}n}$

Wireless charging transmitter circuit 602

NFC/RFID card detection circuit 605

Controller 601

Wireless charging transmit coil 6041

NFC/RFID transmit coil 6042

FIG. 11

Europäisches
Patentamt

European
Patent Office

Office européen
des brevets

## EUROPEAN SEARCH REPORT

Application Number

EP 23 17 4909

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2013 0123310 A (SAMSUNG ELECTRONICS CO LTD [KR]) 12 November 2013 (2013-11-12) | 1-9,11 | INV. H02J7/00 H02J50/00 H02J50/12 |
| A | * paragraphs [0006], [0015] * | 12,14 | |
| X | US 2014/349572 A1 (BEN-SHALOM AMIR [IL] ET AL) 27 November 2014 (2014-11-27) | 1,3-5, 7-9 | |
| A | * paragraphs [0073], [0074]; figures 1,7A * | 12,14 | |
| X | US 2016/141890 A1 (SMITH AARON [GB]) 19 May 2016 (2016-05-19) | 1,3-5, 7-10 | |
| A | * paragraph [0048]; figure 3 * | 12,14 | |
| A | WO 2015/134117 A1 (APPLE INC [US]) 11 September 2015 (2015-09-11) * paragraphs [0055] - [0057]; figure 3 * | 1-14 | |
| A | WO 2016/144535 A1 (QUALCOMM INC [US]) 15 September 2016 (2016-09-15) * paragraphs [0002], [0011], [0012], [0062] - [0064], [0119] * | 1-14 | TECHNICAL FIELDS SEARCHED (IPC) H02J |

The present search report has been drawn up for all claims

| Place of search | Date of completion of the search | Examiner |
|---|---|---|
| Munich | 28 November 2023 | Hanisch, Thomas |

EPO FORM 1503 03.82 (P04C01)

## ANNEX TO THE EUROPEAN SEARCH REPORT
## ON EUROPEAN PATENT APPLICATION NO.

EP 23 17 4909

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2023

| Patent document cited in search report | | Publication date | Patent family member(s) | | Publication date |
|---|---|---|---|---|---|
| KR 20130123310 | A | 12-11-2013 | NONE | | |
| US 2014349572 | A1 | 27-11-2014 | NONE | | |
| US 2016141890 | A1 | 19-05-2016 | CN | 103634030 A | 12-03-2014 |
| | | | EP | 2704333 A2 | 05-03-2014 |
| | | | HK | 1191761 A1 | 01-08-2014 |
| | | | TW | 201411983 A | 16-03-2014 |
| | | | US | 2014057559 A1 | 27-02-2014 |
| | | | US | 2016141890 A1 | 19-05-2016 |
| WO 2015134117 | A1 | 11-09-2015 | CN | 105940550 A | 14-09-2016 |
| | | | CN | 111755820 A | 09-10-2020 |
| | | | EP | 3087637 A1 | 02-11-2016 |
| | | | US | 2015249292 A1 | 03-09-2015 |
| | | | US | 2016197401 A1 | 07-07-2016 |
| | | | WO | 2015134117 A1 | 11-09-2015 |
| WO 2016144535 | A1 | 15-09-2016 | CN | 107409277 A | 28-11-2017 |
| | | | EP | 3266113 A1 | 10-01-2018 |
| | | | JP | 2018513584 A | 24-05-2018 |
| | | | TW | 201635728 A | 01-10-2016 |
| | | | US | 2016261976 A1 | 08-09-2016 |
| | | | WO | 2016144535 A1 | 15-09-2016 |

EPO FORM P0459

For more details about this annex : see Official Journal of the European Patent Office, No. 12/82